# EUROPEAN PATENT APPLICATION

(11) **EP 3 200 427 A1**
(43) Date of publication of application: **02.08.2017**
(21) Application number: 14884510.0
(22) Date of filing: 15.12.2014
(51) Int. Cl.: H04L 29/08

(54) **OBJECT INFORMATION PROCESSING METHOD, DEVICE AND ORS APPLICATION GATEWAY**

(30) Priority: 23.09.2014 CN 201410491833
(71) Applicant: ZTE Corporation, Shenzhen, Guangdong 518057 (CN)
(72) Inventor: LI, Yang, Shenzhen Guangdong 518057 (CN); TANG, Kai, Shenzhen Guangdong 518057 (CN); GAO, Feng, Shenzhen Guangdong 518057 (CN)
(74) Representative: Mozzi, Matteo
(86) International application number: PCT/CN2014/093885
(87) International publication number: WO 2015/131606

(57) **Abstract**

An object information processing method and apparatus, and an Object Identifier Resolution System (ORS) application gateway are provided. In the method, a request message transmitted by a specific application and used for requesting object information is received, wherein the request message carries an Object Identifier (OID) of the object information; the object information corresponding to the OID is acquired from an Application Server (AS) according to the OID; the acquired object information is converted into a format requested by the specific application; and the object information converted into the format requested by the specific application is transmitted to the specific application. The technical scheme solves a problem in the relevant art that an existing application system does not support ORS application resolution and thus cannot access an ORS. The technical scheme further achieves an effect of smooth integration with the ORS system without changing the existing ORS system.

## Description

### Technical Field

The present disclosure relates to the field of communications, and in particular to an object information processing method and apparatus, and an Object Identifier Resolution System (ORS) application gateway.

### Background

An Object Identifier (OID) is an identification mechanism co-proposed by International Organizations for Standardization/ International Electrotechnical Commission (ISO/IEC) and an International Telecommunication Union (ITU). The OID is used for performing global unambiguous and unique naming on any types of objects. The OID has the advantages of layering flexibility, high expandability, compatibility with an existing identification mechanism, application to a plurality of fields, technical maturity, clear management mechanism and the like. Currently, the OID has been widely applied to various fields such as information safety, health care, network management and the like. Recently, with the development of technologies and industries such as Internet of things, it is urgently required to perform identification management and information interaction on many types of objects. As a consequence, the OID is further concerned. From the perspective of management mechanisms, technical advantages, technical maturity, application popularization, international standardization, national standardization, etc., the OID is the most advantageous solution for object identification management.

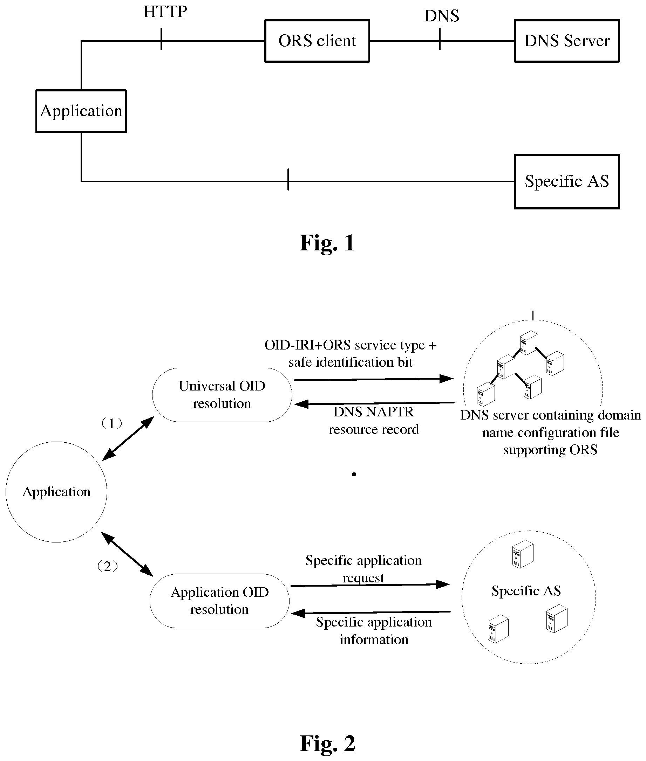

Before an OID registration resolution technology is clearly defined, object identification involved information systems have existed in many enterprises. In order to enable wider usage of an ORS, the system should be compatible with an existing identification system. Fig. 1 is a structural diagram of an ORS defined by a standard in the related art. As shown in Fig. 1, the ORS includes a specific application querying object information, an ORS client, a Domain Name Server (DNS) server for saving an Application Server (AS) address of specific application information, and an AS. Fig. 2 is a schematic diagram of an ORS resolution process in the related art. As shown in Fig. 2, the ORS resolution process includes two parts namely a universal OID resolution process and a specific application OID resolution process. The universal OID resolution process is performed by virtue of the DNS and DNS resource record, and contains an interaction process between an application retrieving information (specified by a specific application) in a DNS system and an ORS client. The universal OID resolution process usually returns a text Uniform Resource Locator (URL), a standardized Object Identifier-International Resource Identifier (OID-IRI), a domain name or an Internet Protocol (IP) address. A specific application OID resolution process follows a universal resolution process, and an application process acquires final information needed for the application by using information obtained in the universal resolution process.

However, when the application process acquires the final information needed for the application by using the information obtained in the universal resolution process, the AS needs to support extraction of application information in an XML file form via a URL. However, most of current application systems save object application information in a database form, and do not support an application resolution function.

Therefore, a problem that an existing application system does not support ORS application resolution and thus cannot access an ORS exists in the related art.

### Summary

Some embodiments of the present disclosure provide an object information processing method or apparatus, or an ORS application gateway, which is intended to solve a problem in the relevant art that an existing application system does not support ORS application resolution and thus cannot access an ORS.

According to an aspect of the embodiments of the present disclosure, an object information processing method is provided. In the method, a request message transmitted by a specific application and used for requesting object information is received, and the request message carries an OID of the object information; the object information corresponding to the OID is acquired from an AS according to the OID; the acquired object information is converted into a format requested by the specific application; and the object information converted into the format requested by the specific application is transmitted to the specific application.

In an exemplary embodiment, before the object information corresponding to the OID is acquired from the AS according to the OID, the method may further include that: authorization verification is performed on the requested object information, and the object information corresponding to the OID is acquired from the AS according to the OID when that authorization is passed.

In an exemplary embodiment, the authorization verification may be performed on the requested object information via IP address black list and/or IP address white list.

In an exemplary embodiment, before the acquired object information is converted into the format requested by the specific application, the method may further include that: privacy protection processing is performed on the object information.

In an exemplary embodiment, performing privacy protection processing on the object information may include at least one of: allowing a part of the object information to be queried by all requests; and allowing a part of the object information to be queried by a predetermined number of requests.

According to another aspect of the embodiments of the present disclosure, an object information processing apparatus is provided, which may include a receiving module, an acquisition module, a conversion module and a transmitting module. The receiving module is arranged to receive a request message transmitted by a specific application and used for requesting object information, and the request message carries an OID of the object information. The acquisition module is arranged to acquire, according to the OID, the object information corresponding to the OID from an AS. The conversion module is arranged to convert the acquired object information into a format requested by the specific application. A transmitting module is arranged to transmit, to the specific application, the object information converted into the format requested by the specific application.

In an exemplary embodiment, the apparatus may further include: an authorization verification module, arranged to perform authorization verification on the requested object information, and acquire, according to the OID, the object information corresponding to the OID from the AS when authorization is passed.

In an exemplary embodiment, the authorization verification module may be arranged to perform authorization verification on the requested object information via IP address black list and/or IP address white list.

In an exemplary embodiment, the apparatus may further include: a processing module, arranged to perform privacy protection processing on the object information.

In an exemplary embodiment, the processing module may be further arranged to perform privacy protection processing on the object information according to at least one of the following modes: allowing a part of the object information to be queried by all requests; and allowing a part of the object information to be queried by a predetermined number of requests.

According to a further aspect of the embodiments of the present disclosure, an ORS application gateway is provided, which may include any one of the above-mentioned apparatuses.

In the technical scheme provided by the embodiments of the present disclosure, a request message transmitted by a specific application and used for requesting object information is received, and the request message carries an OID of the object information. The object information corresponding to the OID is acquired from an AS according to the OID. The acquired object information is converted into a format requested by the specific application. The object information converted into the format requested by the specific application is transmitted to the specific application. A problem in the relevant art that an existing application system does not support ORS application resolution and thus cannot access an ORS is solved, thereby achieving an effect of smooth integration with the ORS without changing the existing ORS.

### Brief Description of the Drawings

The drawings illustrated herein are intended to provide further understanding of the present disclosure, and form a part of the present application. The schematic embodiments and illustrations of the present disclosure are intended to explain the present disclosure, and do not form limits to the present disclosure. In the drawings:
Fig. 1 is a structural diagram of an ORS defined by a standard in the related art;
Fig. 2 is a schematic diagram of an ORS resolution process in the related art;
Fig. 3 is a flowchart of an object information processing method according to an embodiment of the present disclosure;
Fig. 4 is a block diagram of an object information apparatus according to an embodiment of the present disclosure;
Fig. 5 is an exemplary block diagram 1 of an object information apparatus according to an exemplary embodiment of the present disclosure;
Fig. 6 is an exemplary block diagram 2 of an object information apparatus according to an embodiment of the present disclosure;
Fig. 7 is a block diagram of an ORS application gateway according to an embodiment of the present disclosure;
Fig. 8 is a block diagram of an improved ORS according to an exemplary implementation mode 1 of the present disclosure;
Fig. 9 is a schematic diagram of an improved ORS application resolution process according to an exemplary implementation mode 2 of the present disclosure;
Fig. 10 is a flowchart of improved ORS object information query according to an exemplary implementation mode 3 of the present disclosure; and
Fig. 11 is a flowchart of improved ORS object information query having authorization and privacy protection functions according to an exemplary implementation mode 4 of the present disclosure.

### Detailed Description of the Embodiments

The present disclosure will be illustrated hereinbelow with reference to the drawings and in conjunction with embodiments in detail. It is important to note that the embodiments in the present application and the features in the embodiments may be combined under the condition of no conflicts.

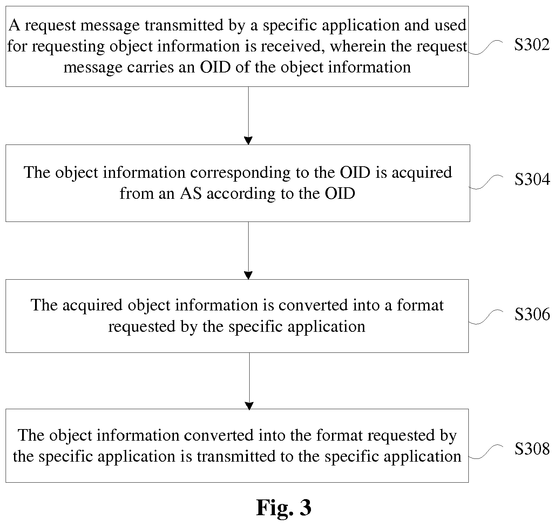

An object information processing method is provided in the present embodiment. Fig. 3 is a flowchart of an object information processing method according to an embodiment of the present disclosure. As shown in Fig. 3, the flow includes the following steps.

At Step S302, a request message transmitted by a specific application and used for requesting object information is received, and the request message carries an OID of the object information.

At Step S304, the object information corresponding to the OID is acquired from an AS according to the OID.

At Step S306, the acquired object information is converted into a format requested by the specific application.

At Step S308, the object information converted into the format requested by the specific application is transmitted to the specific application.

By means of the above step of converting object information requested to be acquired into a format corresponding to a specific application, a problem in the relevant art that an existing application system does not support ORS application resolution and thus cannot access an ORS is solved, thereby achieving an effect of smooth integration with the ORS without changing the existing ORS.

In order to enhance the controllability in acquisition of the object information, before the object information corresponding to the OID is acquired from the AS according to the OID, the method may further include processing as follows. Authorization verification is performed on the requested object information, and the object information corresponding to the OID is acquired from the AS according to the OID when authorization is passed. There may be many authorization verification modes. For example, the authorization verification may be performed on the requested object information via IP address black list and/or IP address white list.

In order to enhance the flexibility in management of the object information, before the acquired object information is converted into the format requested by the specific application, privacy protection processing may be performed on the object information. There may be various modes of performing privacy protection processing on the object information. For example, the privacy protection processing performed on the object information may include at least one of: allowing a part of the object information to be queried by all requests; and allowing a part of the object information to be queried by a predetermined number of requests.

An object information apparatus is provided in another embodiment. The apparatus is arranged to implement the above-mentioned embodiment and exemplary implementation mode. Those which have been illustrated will not be elaborated herein. Just as a term 'module' used below, the combination of software and/or hardware with predetermined functions may be implemented. Although the apparatus described by the following embodiment is better implemented by software, the implementation of hardware or the combination of software and hardware may be possible and conceived.

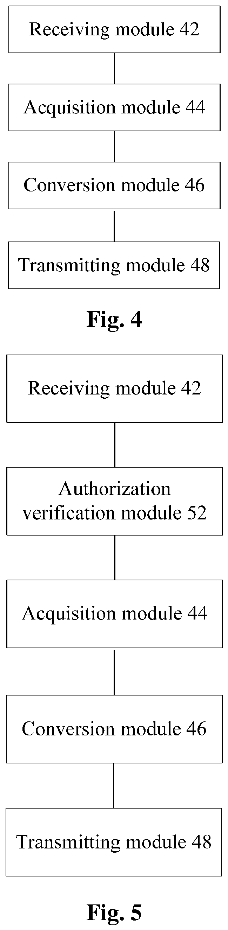

Fig. 4 is a block diagram of an object information apparatus according to an embodiment of the present disclosure. As shown in Fig. 4, the apparatus includes a receiving module 42, an acquisition module 44, a conversion module 46 and a transmitting module 48. The apparatus will be illustrated hereinbelow.

The receiving module 42 is arranged to receive a request message transmitted by a specific application and used for requesting object information, and the request message carries an OID of the object information. The acquisition module 44 is coupled to the receiving module 42 and is arranged to acquire, according to the OID, the object information corresponding to the OID from an AS. The conversion module 46 is coupled to the acquisition module 44 and is arranged to convert the acquired object information into a format requested by the specific application. The transmitting module 48 is coupled to the conversion module 46 and is arranged to transmit, to the specific application, the object information converted into the format requested by the specific application.

Fig. 5 is an exemplary block diagram 1 of an object information apparatus according to an exemplary embodiment of the present disclosure. As shown in Fig. 5, in addition to the structure as shown in Fig. 4, the apparatus may further include an authorization verification module 52. The authorization verification module 52 will be illustrated hereinbelow.

The authorization verification module 52 is coupled to the receiving module 42 and the acquisition module 44, and is arranged to perform authorization verification on the requested object information, and acquire, according to the OID, the object information corresponding to the OID from the AS when authorization is passed.

In an exemplary embodiment, the authorization verification module 52 is further arranged to perform authorization verification on the requested object information via IP address black list and/or IP address white list.

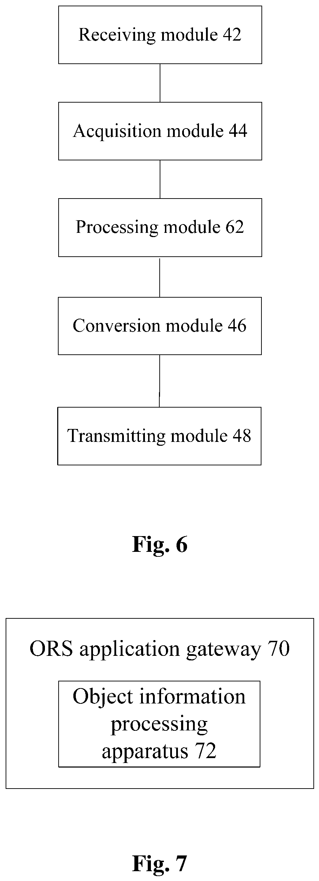

Fig. 6 is an exemplary block diagram 2 of an object information apparatus according to an embodiment of the present disclosure. As shown in Fig. 6, in addition to the structure as shown in Fig. 4, the apparatus further includes a processing module 62. The processing module 62 will be illustrated hereinbelow.

The processing module 62 is coupled to the acquisition module 44 and the conversion module 46, and is arranged to perform privacy protection processing on the object information.

In an exemplary embodiment, the processing module 62 is further arranged to perform privacy protection processing on the object information according to at least one of the following modes: allowing a part of the object information to be queried by all requests; and allowing a part of the object information to be queried by a predetermined number of requests.

Fig. 7 is a block diagram of an ORS application gateway according to an embodiment of the present disclosure. As shown in Fig. 7, the ORS application gateway 70 includes any one of the above-mentioned object information processing apparatus 72.

For the above-mentioned problem in the related art, in the present embodiment, an improved ORS processing solution is provided. The solution can effectively solve the problem about how to access an ORS when an existing application system does not support ORS application resolution. Moreover, the solution can add a system management control function. The solution is explained in detail below.

A functional entity, i.e., ORS application gateway is added between a specific application and an AS to support functional conversion of ORS application resolution, privacy protection processing on object information, query authorization and the like.

For example, during ORS universal resolution, an information address of an object identified by an OID is configured to be an ORS application gateway address in a DNS server. After a specific application completes universal resolution, in an application ORS resolution process, a request URL is transmitted to the ORS application gateway. The ORS application gateway extracts an identifier OID according to information in the request, and then, the ORS application gateway searches for corresponding object information in an AS by using the OID as the identifier. The object information is converted into a format requested by the URL finally, and the object information is returned to the application transmitting the request.

The ORS application gateway may execute an authorization function according to an IP address, and object information can be queried only when authorization is passed. For example, authorization may be performed by setting IP address black list and/or IP address white list.

Before the ORS application gateway constructs object information requested by the specific application, an object information privacy protection function is executed. A part of the object information is allowed to be queried by all requests, or is allowed to be queried by a part of requests. The authorization function may be executed to judge which requests can query the part of object information.

The above-mentioned method has the advantage of smooth integration with the ORS without changing the existing ORS. Moreover, the system is manageable and controllable.

An exemplary implementation mode is illustrated hereinbelow.

### Exemplary implementation mode 1

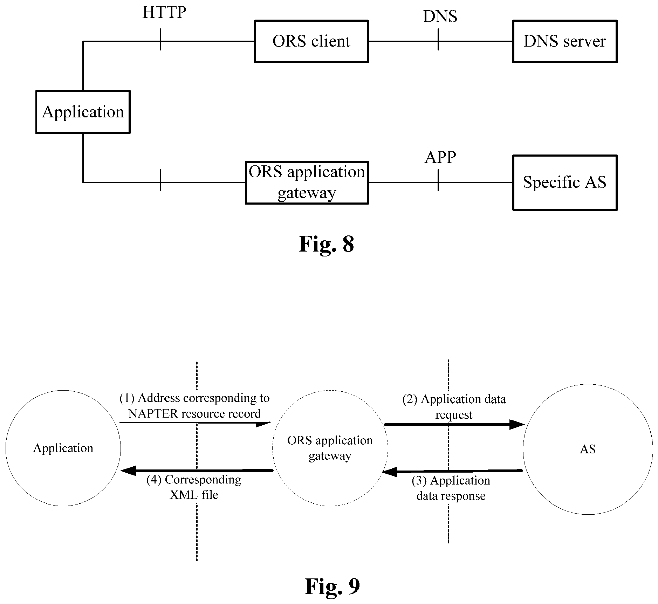

Fig. 8 is a block diagram of an improved ORS according to an exemplary implementation mode 1 of the present disclosure. As shown in Fig. 8, an ORS application gateway is added to an improved ORS structure.

An ORS application gateway functional entity has a main function of supporting ORS application resolution information conversion, object information privacy protection, query authorization and the like. Information conversion refers to returning of object information in an AS in a form requested by the specific application.

### Exemplary implementation mode 2

Fig. 9 is a schematic diagram of an improved ORS application resolution process according to an exemplary implementation mode 2 of the present disclosure. As shown in Fig. 9, the resolution process is described in detail as follows.
(1) A specific application transmits a request to an ORS application gateway. The request message may carry a URL of corresponding object information in an NAPTR resource record.
(2) After receiving the request, the ORS application gateway extracts an OID, and transmits an object information request message to an AS.
   In this process, an authorization function may be executed according to an IP address, and object information can be queried only when authorization is passed. For example, authorization may be performed by setting IP address black list and/or IP address white list.
(3) After receiving the object information request message, the AS returns object information to the ORS application gateway according to its own data arrangement form.
(4) The ORS application gateway converts the received object information to a format requested by the specific application such as an XML, and then gives a response to the specific application.

Before constructing the object information requested by the specific application, the ORS application gateway executes an object information privacy protection function. A part of the object information is allowed to be queried by all requests, or is allowed to be queried by a part of requests. The authorization function may be executed to judge which requests can query the part of object information specifically.

### Exemplary implementation mode 3

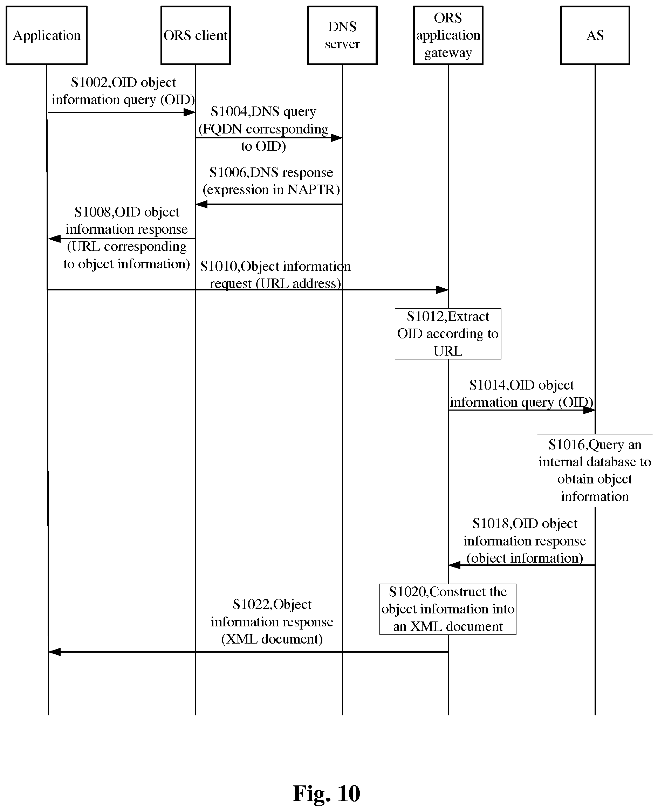

Fig. 10 is a flowchart of improved ORS object information query according to an exemplary implementation mode 3 of the present disclosure. As shown in Fig. 10, the improved ORS object information query flow mainly includes an information conversion function of an ORS application gateway. The flow includes the following steps.

At Step S1002, a specific application transmits an OID object information query request carrying an OID to an ORS client.

At Step S1004, the ORS client converts the OID into an FQDN, and then transmits a DNS query request to a DNS server.

At Step S1006, the DNS server performs DNS query, and transmits a query result to the ORS client.

At Step S1008, the ORS client transmits an OID object information query response carrying a URL of a specific object information position to the specific application.

At Step S1010, the specific application transmits, to an ORS application gateway, a request carrying a URL of corresponding object information in an NAPTR resource record.

At Step S1012, after receiving the request, the ORS application gateway extracts an OID according to the information in the URL.

At Step S1014, the ORS application gateway transmits an object message request message to an AS.

At Step S1016, after receiving the object message request message, the AS queries an internal database to obtain object information.

At Step S1018, the AS returns the object information to the ORS application gateway according to its own data arrangement form.

At Step S1020, the ORS AS converts the received object information to a format requested by the specific application such as an XML.

At Step S1022, the ORS AS sends a response carrying the object information to the specific application,

### Exemplary implementation mode 4

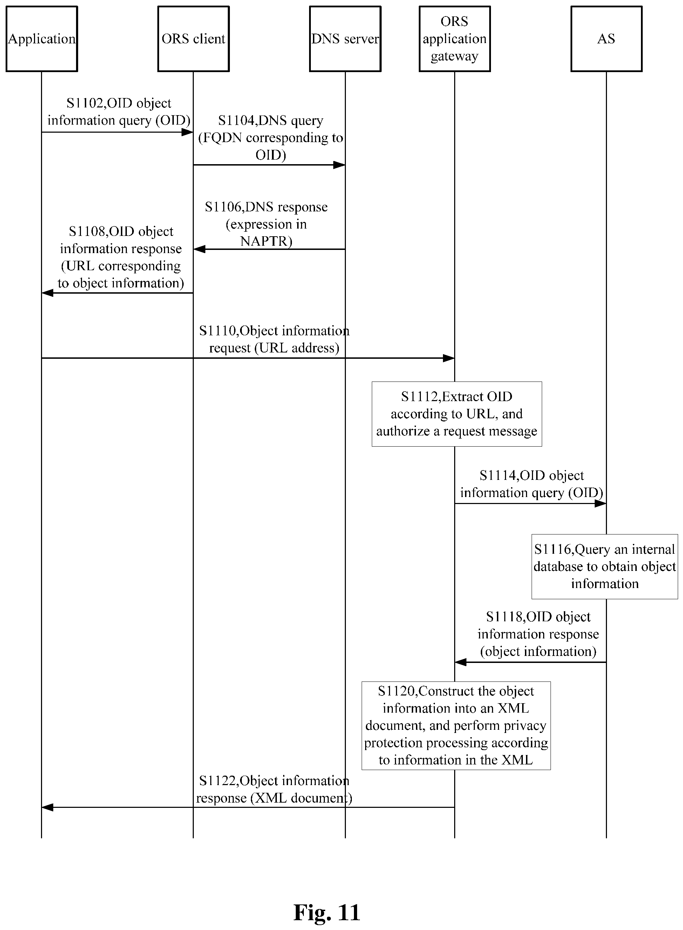

Fig. 11 is a flowchart of improved ORS object information query having authorization and privacy protection functions according to an exemplary implementation mode 4 of the present disclosure. As shown in Fig. 11, the flow includes authorization and privacy protection functions of an ORS application gateway. The flow includes the following steps.

Step S1102: A specific application transmits an OID object information query request carrying an OID to an ORS client.

Step S1104: The ORS client converts the OID into an FQDN, and then transmits a DNS query request to a DNS server.

Step S1106: The DNS server performs DNS query, and transmits a query result to the ORS client.

Step S1108: The ORS client transmits an OID object information query response carrying a URL of a specific object information position to the specific application.

Step S1110: The specific application transmits, to an ORS application gateway, a request carrying a URL of corresponding object information in an NAPTR resource record.

Step S1112: After receiving the request, the ORS application gateway extracts an OID according to the information in the URL. Then, an authorization function is executed according to an IP address, and object information can be queried only when authorization is passed. Authorization is performed by setting IP address black list and/or IP address white list.

Step S1114: The ORS application gateway transmits an object message request message to an AS.

Step S1116: After receiving the object message request message, the AS queries an internal database to obtain object information.

Step S1118: The AS returns the object information to the ORS application gateway according to its own data arrangement form.

Step S1120: The ORS AS converts the received object information to a format requested by the specific application such as an XML.

Step S1122: Before constructing the object information requested by the specific application, the ORS application gateway executes the object information privacy protection function. The ORS application gateway needs to delete information needing to be hidden before constructing the object information. The ORS AS gives a response carrying the object information to the specific application.

Obviously, those skilled in the art shall understand that all of the above-mentioned modules or steps in the present disclosure may be implemented using a general calculation apparatus, may be centralized on a single calculation apparatus or may be distributed on a network composed of a plurality of calculation apparatuses. Alternatively, they may be implemented using executable program codes of the calculation apparatuses. Thus, they may be stored in a storage medium and executed by the calculation apparatuses, the shown or described steps may be executed in a sequence different from this sequence under certain conditions, or they are manufactured into each integrated circuit module respectively, or multiple modules or steps therein are manufactured into a single integrated circuit module. Thus, the present disclosure is not limited to a combination of any specific hardware and software.

The above is only the exemplary embodiments of the present disclosure, and not intended to limit the present disclosure. There may be various modifications and variations in the present disclosure for those skilled in the art. Any modifications, equivalent replacements, improvements and the like within the principle of the present disclosure shall fall within the scope of protection defined by the appended claims of the present disclosure.

### Industrial Applicability

As above, the above-mentioned embodiments and exemplary implementation modes solve a problem in the relevant art that an existing application system does not support ORS application resolution and thus cannot access an ORS, thereby achieving an effect of smooth integration with the ORS without changing the existing ORS.

## Claims

1. An object information processing method, comprising:
receiving a request message transmitted by a specific application and used for requesting object information, wherein the request message carries an Object Identifier, OID, of the object information;
acquiring, according to the OID, the object information corresponding to the OID from an Application Server, AS;
converting the acquired object information into a format requested by the specific application; and
transmitting, to the specific application, the object information converted into the format requested by the specific application.

2. The method as claimed in claim 1, wherein before the object information corresponding to the OID is acquired from the AS according to the OID, the method further comprises:
performing authorization verification on the requested object information, and acquiring, according to the OID, the object information corresponding to the OID from the AS when authorization is passed.

3. The method as claimed in claim 2, wherein the authorization verification is performed on the requested object information via Internet Protocol, IP, address black list and/or IP address white list.

4. The method as claimed in claim 1, wherein before the acquired object information is converted into the format requested by the specific application, the method further comprises:
performing privacy protection processing on the object information.

5. The method as claimed in claim 4, wherein performing the privacy protection processing on the object information comprises at least one of:
allowing a part of the object information to be queried by all requests; and
allowing a part of the object information to be queried by a predetermined number of requests.

6. An object information processing apparatus, comprising:
a receiving module, arranged to receive a request message transmitted by a specific application and used for requesting object information, wherein the request message carries an Object Identifier, OID, of the object information;
an acquisition module, arranged to acquire, according to the OID, the object information corresponding to the OID from an Application Server, AS;
a conversion module, arranged to convert the acquired object information into a format requested by the specific application; and
a transmitting module, arranged to transmit, to the specific application, the object information converted into the format requested by the specific application.

7. The apparatus as claimed in claim 6, further comprising:
an authorization verification module, arranged to perform authorization verification on the requested object information, and acquire, according to the OID, the object information corresponding to the OID from the AS when authorization is passed.

8. The apparatus as claimed in claim 7, wherein the authorization verification module is arranged to perform authorization verification on the requested object information via Internet Protocol, IP, address black list and/or IP address white list.

9. The apparatus as claimed in claim 6, further comprising:
a processing module, arranged to perform privacy protection processing on the object information.

10. The apparatus as claimed in claim 9, wherein the processing module is further arranged to perform privacy protection processing on the object information according to at least one of the following modes:
allowing a part of the object information to be queried by all requests; and
allowing a part of the object information to be queried by a predetermined number of requests.

11. An Object Identifier Resolution System, ORS, application gateway, comprising the apparatus as claimed in any one of claims 6 to 10.
